# EUROPEAN PATENT SPECIFICATION

(11) **EP 3 400 732 B1**
(45) Date of publication and mention of the grant of the patent: **26.08.2020**
(21) Application number: 17736350.4
(22) Date of filing: 05.01.2017
(51) Int. Cl.: H04W 16/28, H04W 24/02, H04B 7/06

(54) **SYSTEM AND METHOD FOR CARRIER AGGREGATION USING BEAMFORMING**
SYSTEM UND VERFAHREN ZUR TRÄGERAGGREGATION MITHILFE VON STRAHLFORMUNG
SYSTÈME ET PROCÉDÉ D'AGRÉGATION DE PORTEUSES UTILISANT LA FORMATION DE FAISCEAU

(30) Priority: 08.01.2016 US 201662276519 P
(43) Date of publication of application: 14.11.2018
(73) Proprietor: CommScope Technologies LLC, Hickory, NC 28602 (US)
(72) Inventor: BUTLER, Ray, Allen, Texas 75002 (US); MICHAELIS, Scott, Plano, Texas 75075 (US); MARTOS, Pedro Torres, Hickory, North Carolina 28602 (US); MEYER, Louis, Hickory, North Carolina 28602 (US); ZIMMERMAN, Martin L., Chicago, Illinois 6064 (US); PATEL, Sammit, Dallas, Texas 75206 (US); HAMDY, Mohamed Nadder, Dubai (AE); KURK, Morgan, Sachse, Texas 75048 (US); WOLFE, Michael, Dalls, Texas 75252 (US)
(74) Representative: Meissner Bolte Partnerschaft mbB
(86) International application number: PCT/US2017/012359
(87) International publication number: WO 2017/120356

(56) References cited:
- WO-A1-2015/036020
- US-A1- 2009 323 530
- US-A1- 2010 164 804
- US-A1- 2013 116 011
- US-A1- 2013 308 717
- US-A1- 2015 092 621
- US-A1- 2015 163 683

## Description

### BACKGROUND

Various aspects of the present disclosure relate to base station antennas, and, more particularly, to systems and methods for carrier aggregation using beamforming.

In order to provide full and continuous coverage within each cell of a wireless communication system, proper alignment of each individual base station antenna is essential. A great deal of time and money is spent in developing and optimizing wireless networks to accommodate increased subscriber traffic and for the deployment of new radio access technologies. Because a wireless communication system operates in a cellular layout, each individual antenna is responsible for not only providing good coverage when transmitting information to, and receiving information from, user equipments (UEs) within their respective sectors within the cell, but also for not interfering with communication in other sectors. Errors in correctly pointing a base station antenna may reduce the signal strength or coverage of a sector while causing excessive interference in an adjacent sector.

In recent years, advances in antenna technology have made it possible to electronically adjust a pointing direction of an antenna beam that is formed by a base station antenna, as well as the size/shape of pattern of the antenna beam. For example, base station antennas are commercially available which can adjust the boresite (azimuth angle) and tilt angle of the antenna beam adjusted within a certain range without physically moving the housing and/or reflector of the antenna. Other beamforming techniques, such as adaptable beamforming across a coverage area are being developed to more efficiently steer and adjust an antenna beam pattern. Other features are being implemented to meet the demands of increased subscriber traffic which include carrier aggregation.

### SUMMARY

US Patent Application 2013/0116011 A1 discloses a base station and/or radio unit for creating overlaid sectors with carrier aggregation.

US Patent Application 2009/0323530 A1 discloses dynamic balancing of coverage areas in a wireless communication network.

Aspects of the present disclosure may be directed to systems and methods for operating an antenna. The system may include a beamforming module coupled to first and second arrays of radiating elements, the first array being configured to provide wireless coverage on a first frequency carrier in a first coverage area, and the second array being configured to provide wireless coverage on a second frequency carrier in a second coverage area, which may be a subset of the first coverage area, or different from the first coverage area. The beamforming module may be configured to receive one or more indicators associated with one or more UEs in the coverage area. Based on the one or more indicators, the beamforming module may be configured to dynamically adjust, in the radio frequency ("RF") domain, at least one of a location of the second coverage area and a size of the second coverage area. Further, based on the one or more indicators, the beamforming module may be configured to dynamically adjust, in the RF domain, at least one of a location of the first coverage area and a size of the first coverage area.

### BRIEF DESCRIPTION OF THE DRAWINGS

The following detailed description of the invention will be better understood when read in conjunction with the appended drawings. It should be understood, however, that the invention is not limited to the precise arrangements and instrumentalities shown. In the drawings:
Fig. 1 is a schematic diagram of an example of a wireless communication system according to an aspect of the present disclosure;
Figs. 2A -2C are example diagrams of primary and secondary component carriers according to an aspect of the present disclosure;
Figs. 3A and 3B are simplified block diagrams of antennas according to an aspect of the present disclosure;
Fig. 4 is a schematic illustration of substantially overlapping coverage areas performed by carrier aggregation according to an aspect of the present disclosure;
Fig. 5 is a schematic illustration of substantially non-overlapping coverage areas performed by carrier aggregation according to an aspect of the present disclosure; and
Fig. 6 is a flow chart illustrating a method for operating an antenna including first and second arrays of radiating elements.

### DETAILED DESCRIPTION

Certain terminology is used in the following description for convenience only and is not limiting. The words "lower," "bottom," "upper" and "top" designate directions in the drawings to which reference is made. Unless specifically set forth herein, the terms "a," "an" and "the" are not limited to one element, but instead should be read as meaning "at least one." The terminology includes the words noted above, derivatives thereof and words of similar import. It should also be understood that the terms "about," "approximately," "generally," "substantially" and like terms, used herein when referring to a dimension or characteristic of a component of the invention, indicate that the described dimension/characteristic is not a strict boundary or parameter and does not exclude minor variations therefrom that are functionally similar. At a minimum, such references that include a numerical parameter would include variations that, using mathematical and industrial principles accepted in the art (e.g., rounding, measurement or other systematic errors, manufacturing tolerances, etc.), would not vary the least significant digit.

Aspects of the present disclosure may utilize adaptive beamforming and carrier aggregation techniques across a coverage area to concentrate the greatest capacity to more desirable areas and to substantially simultaneously steer nulls to remove interfering signals from neighboring sectors. These techniques may be performed in accordance with one or more indicators and/or received location information without the need for processing in a baseband domain.

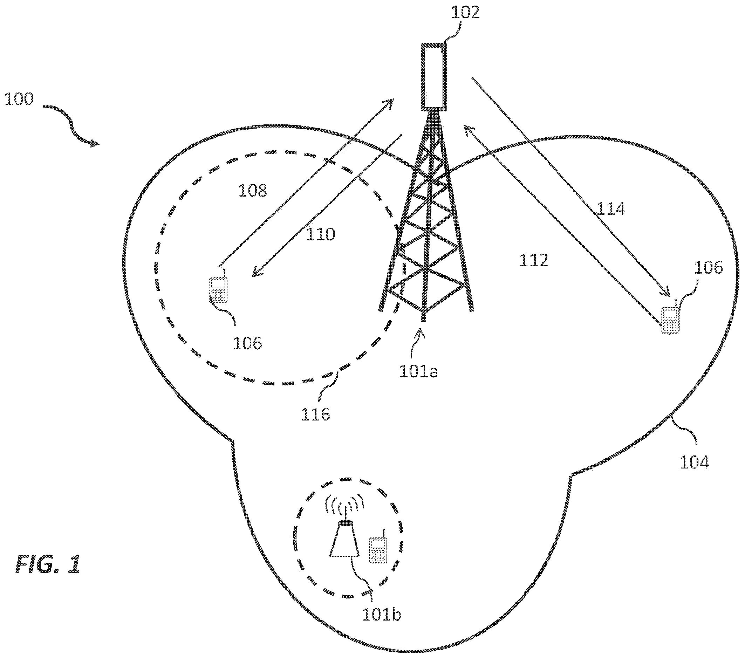

Fig. 1 illustrates an example of a wireless communication system 100 including a base station 101a, otherwise known as an eNodeB (eNB), with an antenna 102. In Fig. 1, only one antenna 102 is shown, however more antennas may be utilized at the eNB 101a. The eNB 101a may provide communication coverage for a macro cell. The wireless communication system 100 may have additional eNBs, which may provide communication coverage for a macro cell, or a small cell such as eNB 101b, which may provide communication coverage for a pico cell, a femto cell, and/or other types of cells. In the example shown in Fig. 1, the eNB 101a may cover a primary cell 104. It should be noted that the eNB 101a may cover additional cells as well. It should also be noted that the wireless communication system 100 may include any combination of eNBs 101a, 101b providing any combination of communication coverage. It should also be noted that the eNB 101b may also be a part of another network, such as a small cell network, which may also include a controller that communications with one or more access points over a local area network, such as an Ethernet-based network.

Each of the eNBs 101a, 101b may include a radio unit (not shown) and a baseband unit (not shown), which may be located proximate to the same. Alternatively, the baseband unit may be located remote to the eNBs 101a, 101b. For example, the baseband unit may be centralized and may be connected to the radio unit via a communication cable, such as for example, a Common Public Radio Interface (CPRI) over fiber. It should be noted that the radio unit and the baseband unit may be part of the same unit or may be a separate unit. Further, each of the eNBs 101a, 101b may include other components that are well known to one of ordinary skill in the art.

UEs 106 may be dispersed throughout the system 100 and may be within the primary cell 104. A UE may be a cellular phone, a personal digital assistant (PDA), a wireless modem, a wireless communication device, a handheld device, a laptop computer, a cellular phone, a satellite telephone, a tablet computer, a wireless communication device, a wireless local loop (WLL) station, etc.. A UE may also be referred to as a mobile device, a mobile station, a subscriber unit, and the like.

The UEs 106 may be in communication with the antenna 102. Communication from the antenna 102 to the UE 106 may be referred to as the forward link or downlink, while communication from the UE 106 to the antenna 102 may be referred to as the reverse link or uplink. Communication links 108, 110, 112, 114 may use different frequencies for communication, such as for example, in a frequency division duplex (FDD) technique. For example, the downlink 110 may use a different frequency from that used by the uplink 108. The eNBs 101a, 101b may transmit and receive information from a core network via at least one controller and an IP backhaul (not shown). The core network may provide services to users of a telecommunications network, examples of which may include but are not limited to frequency spectrum allocation, call aggregation, authentication of the UEs 106 or users, call switching, service invocation, gateways to other networks, etc.

The eNBs 101a, 101b may employ multiple-input-multiple-output (MIMO) techniques allowing radiating elements of the antenna 102 to transmit multiple independent and distinct signals to the UEs 106 on the same frequency band using spatially multiplexed channels of the air interfaces and/or different frequency bands using an RF multiple access scheme in order to support multiple carriers.

The wireless communication system can provide for communications in accordance with any wired or wireless communication standard. For example, the wireless communication system can provide for communications in accordance with second-generation (2G) wireless communication protocols IS-136 (time division multiple access (TDMA)), GSM (global system for mobile communication), IS-95 (code division multiple access (CDMA)), third-generation (3G) wireless communication protocols, such as Universal Mobile Telecommunications System (UMTS), CDMA2000, wideband CDMA (WCDMA) and time division-synchronous CDMA (TD-SCDMA), 3.9 generation (3.9G) wireless communication protocols, such as Evolved Universal Terrestrial Radio Access Network (E-UTRAN), with fourth-generation (4G) wireless communication protocols, international mobile telecommunications advanced (IMT-Advanced) protocols, Long Term Evolution (LTE) protocols including LTE-advanced, or the like. Further, the communication network may be configured to provide for communications in accordance with techniques such as, for example, radio frequency (RF), infrared, or any of a number of different wireless networking techniques, including WLAN techniques such as IEEE 802.11 (e.g., 802.11a, 802.11b, 802.11g, 802.11n, etc.), wireless local area network (WLAN) protocols, world interoperability for microwave access (WiMAX) techniques such as IEEE 802.16, and/or wireless Personal Area Network (WPAN) techniques such as IEEE 802.15, BlueTooth™, ultra wideband (UWB) and/or the like.

As discussed above, according to aspects of the present disclosure, carrier aggregation may be utilized in the wireless communication system 100 to increase network and UE throughput, and/or to increase the coverage area. As such, as used herein, the primary cell 104 may generally correspond to a particular component carrier that is to be aggregated. For example, the primary cell 104 may correspond to a first frequency carrier, and a secondary cell 116 may correspond to a second frequency carrier.

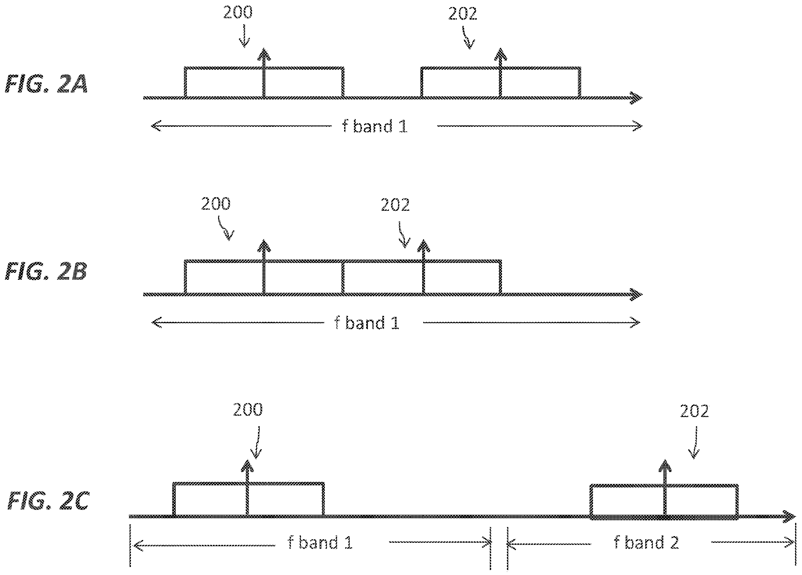

Figs. 2A-2C are diagrams showing an example primary component carrier 200 corresponding to the primary cell 104 of Fig. 1 and an example secondary component carrier 202 corresponding to a secondary cell 116 of Fig. 1, according to different aspects in which two component carriers are aggregated. In the aspect shown in Fig. 2A, the primary component carrier 200 is separated from the secondary component carrier 202 by a frequency gap. Conversely, in the aspect of Fig. 2B, the primary component carrier 200 and secondary component carrier 202 are contiguous in frequency. While Figs. 2A and 2B both show equal bandwidths for the primary component carrier 200 and secondary component carrier 202, in other embodiments and/or scenarios the bandwidths of the primary component carrier 200 and the secondary component carrier 202 are different. Moreover, in some aspects, the primary component carrier 200 and the secondary component carrier 202 may each be associated with a respective uplink frequency sub-band, downlink frequency sub-band, control channel sub-band, and/or other frequency sub-band. Even still, as reflected as Fig. 2C, the primary component carrier 200 and the secondary component carrier 202 may be of entirely separate bands, in an inter-band carrier aggregation scenario.

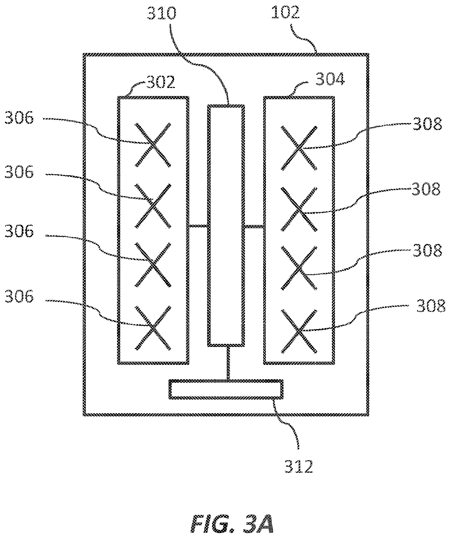

Fig. 3A is a simplified block diagram of the antenna 102 of Fig. 1. The antenna 102 may comprise one or more arrays of radiating elements 306, 308 configured to radiate one or more radio frequency signals. Fig. 3A illustrates first and second arrays 302, 304 including first and second radiating elements 306, 308 respectively. Each of the radiating elements 306, 308 may operate similarly in reception and transmission. The antenna 102 may include more or fewer arrays of radiating elements in keeping with the disclosure.

The first array 302 may be configured to provide wireless coverage on the primary frequency carrier 200, and the second array 304 may be configured to provide wireless coverage on the secondary frequency carrier(s) 202. Alternatively, the first array 302 may be configured to provide wireless coverage on the secondary frequency carrier 202, and the second array 304 may be configured to provide wireless coverage on the primary frequency carrier 300.

An electronic beamforming module 310 may be coupled to the first and second arrays 302, 304, and may be configured to adjust the phase and/or amplitude of subcomponents of the RF signals that are received and transmitted by the individual radiating elements in the first and second arrays 302, 304. The beamforming performed by the beamforming module 310 may be performed using either phase shifting, amplitude variation, or a combination of both phase shifting and amplitude variation without the use of a baseband signal. Accordingly, the beamforming module 310 may include one or more electronically controlled variable phase shifters and one or more variable splitters. The antenna 102 may also include an RF receiver 312 configured to perform additional tracking operations as described in more detail below.

The beamforming module 310 may be configured to create various antenna beam patterns by the above discussed phase and/or amplitude adjustments. These adjustments may be performed based on information derived from the network or received from the UE 106. Key performance indicators (KPIs) such as served traffic, dropped calls, cell/UE throughput may be used as well as other input data including, but not limited to: timing advance (TA), channel quality indicator (CQI), Reference Signal Received Power (RSRP), and Reference Signal Received Quality (RSRQ), UE location information and the like.

Timing Advance may refer to a time offset realized by the eNB 101a between its own transmission and the transmission received from the UE 106. Based on this offset, the beamforming module 310 may determine the suitable timing advance for the UE 106. Then, from this timing advance, the beamforming module 310 may calculate the distance traveled by a radio signal.

The RF receiver 312 may be used in conjunction with the beamforming module 310 for beamforming optimization. For example, the RF receiver 312 may receive one or more signals from the UEs 106 including a known sequence or sequences. Based on an attribute or characteristic of a signal of the UE 106, the beamforming module 310 may compute a location measurement. Such attributes may include but are not limited to: time of arrival (TOA), angle of arrival (AOA), time difference of arrival (TDOA), received power level, timing advance (as discussed above), signal strength, signal-to-noise ratio, and bit error rate. The beamforming module 310 may use such location information for selection of a secondary carrier, such as for operation of carrier aggregation as discussed hereinthroughout, and beamforming.

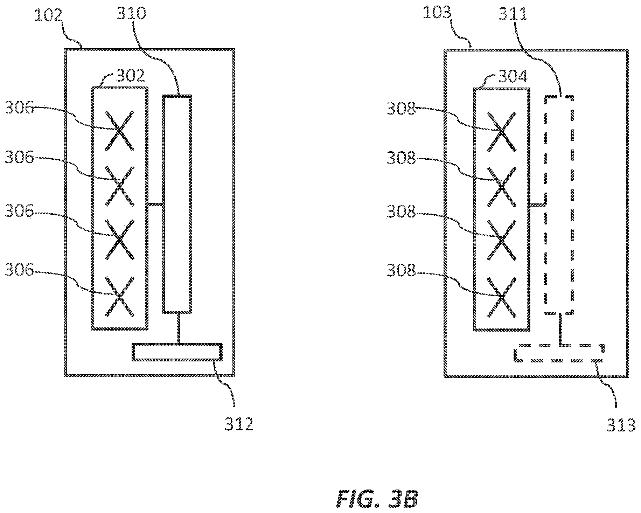

Two columns 302, 304 of arrays of radiating elements 306, 308 are shown in Fig. 3A. However, other arrangements of arrays may be included in keeping with the disclosure. For example, as shown in Fig. 3B, columns of arrays may be separate and distinct. More specifically, as shown in Fig. 3B, the first and second arrays 302, 304 may be located in separate respective antennas 102, 103. Further, each of the first and second arrays 302, 304 may include more or fewer radiating elements 306, 308 in keeping with the disclosure. Optionally, the antenna 103 may also include components similar to those found in the antenna 102, such as a beamforming module 311 and an RF receiver 313.

As shown in Figs. 3A and 3B, the first and second arrays 302, 304 are shown as columns. However, it should be noted that such an arrangement is by way of non-limiting example only. For example, the first and second arrays 302, 304 may be arranged as rows as well, a combination of rows or columns, and the like.

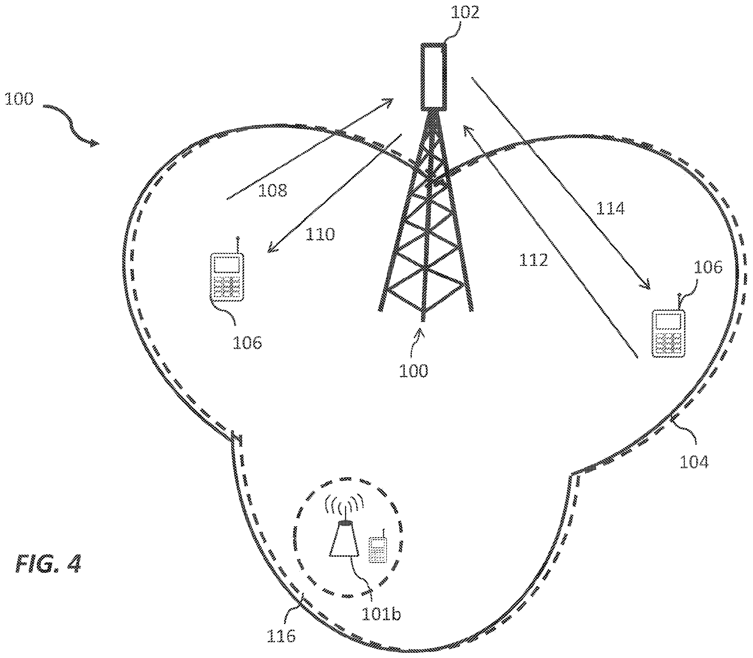

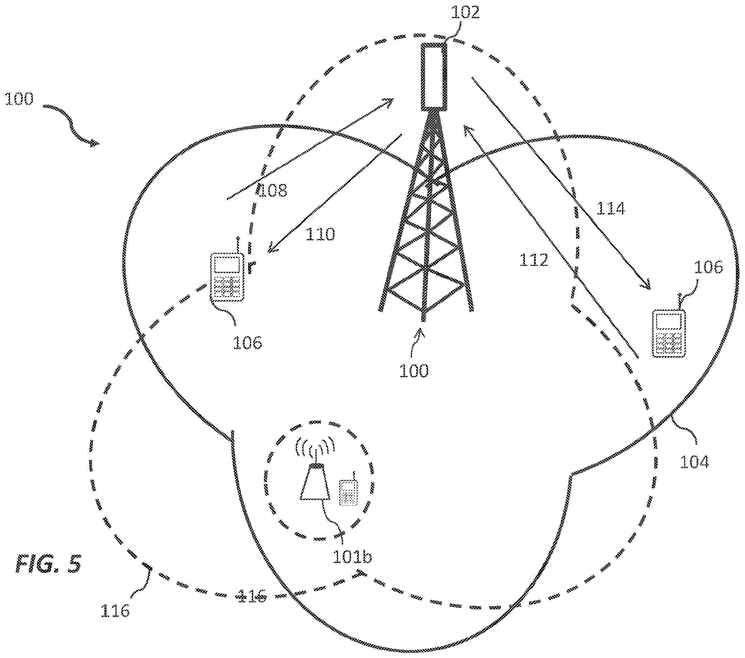

The beamforming module 310 may configure the antenna 102 and/or antenna 103 to create substantially overlapped beam patterns. As shown in Fig. 4, the beam pattern of the primary cell 1 04 may considerably overlap the beam pattern of the secondary cell 116. As another example, as shown in Fig. 5, the beamforming module 310 may configure the antenna 102 and/or antenna 103 to create a beam pattern of the primary cell 104 and a beam pattern of the secondary cell 116 to not substantially overlap each other. For example, the secondary cell 116 may be formed to cover areas not covered by the primary cell 104. This arrangement may allow for overall coverage improvement. In some environments, including multi-path environments, the example of Fig. 5 may also enable greater capacity transmissions in conjunction with MIMO techniques as known in the art.

The beamforming module 310 may not need to demodulate received RF signals, for example, for processing at a MAC layer or other baseband processes. The analysis of the above-discussed key performance indicators and/or traffic information may be performed in the RF Domain or the IF domain. In this fashion, the eNB 101a may be independent of the communication protocol implemented for the RF signals. Because the communication protocol is transparent to the beamforming module 310, there is no need for costly and complex digital signal processing and associated protocol management. Further, the beamforming operations as discussed herein exhibit the same functionality for a network operator regardless of the provider. Stated differently, aspects of the present disclosure may be described as operator agnostic.

As shown, Fig. 1 illustrates one secondary cell 116. However, the antenna 102 may be configured to provide additional secondary cells. The number of secondary cells may depend on factors, such as a traffic distribution inside the primary cell 104 and the capabilities of the antenna 102. The primary cell 104 and/or the one or more secondary cells 116 may be created by the antenna 102 by varying the vertical antenna tilt angle, azimuth angle, and beam pattern.

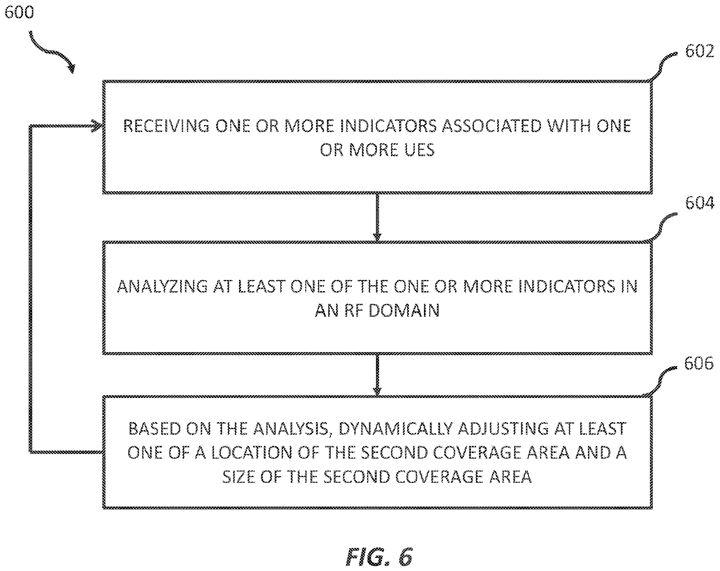

FIG. 6 is a flow chart illustrating a method 600 for operating an antenna including first and second arrays of radiating elements. The first array may be configured to provide wireless coverage on a first frequency carrier in a first coverage area, and the second array may be configured to provide wireless coverage on a second frequency carrier in a second coverage area. At Block 602, one or more indicators associated with one or more user equipments (UEs) may be received. At Block 604, at least one of the one or more indicators may be analyzed in the RF domain. Based on an analysis in the radio frequency (RF) domain of the one of more indicators, at Block 606, at least one of a location and a size of the second coverage area may be dynamically adjusted.

Those of skill in the art would understand that information and signals may be represented using any of a variety of different technologies and techniques. For example, data, instructions, commands, information, signals, bits, symbols, and chips that may be referenced throughout the above description may be represented by voltages, currents parameters, electromagnetic waves, magnetic fields or particles, optical fields or particles, or any combination thereof.

Those of skill would further appreciate that the various illustrative blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system.

The various illustrative blocks described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

Various aspects of the disclosure have now been discussed in detail; however, the invention should not be understood as being limited to these embodiments. It should also be appreciated that various modifications, adaptations, and alternative embodiments thereof may be made within the scope of the present invention as defined by the appended claims.

## Claims

1. A system comprising:
a first array of radiating elements;
a second array of radiating elements;
a beamforming module coupled to the first array of radiating elements and to the second array of radiating elements, the first array of radiating elements being configured to provide wireless coverage on a first frequency carrier in a first coverage area, and the second array of radiating elements being configured to provide wireless coverage on a second frequency carrier in a second coverage area, where the first frequency carrier does not overlap the second frequency carrier, the beamforming module configured to:
receive one or more indicators associated with one or more user equipments, UEs, in at least one of the first coverage area or the second coverage area;
analyze the one or more indicators in a radio frequency, RF, domain or an intermediate frequency, IF, domain; and based on said analysis of the one or more indicators, dynamically adjusting in the RF domain at least one of a location of the first or second coverage area, or a size of the first or second coverage area.

2. The system of claim 1, wherein dynamically adjusting in the RF domain at least one of the location of the first or second coverage area, or the size of the first or second coverage area comprises an adjustment of at least one of a tilt angle, azimuth angle, or antenna pattern of the first array of radiating elements or the second array of radiating elements.

3. The system of claim 2, wherein dynamically adjusting in the RF domain at least one of the location of the first or second coverage area, or the size of the first or second coverage area comprises steering a null of the antenna pattern to an undesired area.

4. The system of any of claims 1-3, wherein the second coverage area is within the first coverage area.

5. The system of any of claims 1-3, wherein the first array is housed in a first antenna and the second array is housed in a second antenna.

6. The system of any of claims 1-3, wherein the one or more indicators include at least one of call quality information, call signal strength information, or traffic location information associated with at least one of the one or more UEs.

7. The system of any of claims 1-3, wherein the one or more indicators includes timing advance information.

8. The system of claim 1, further comprising
a tracking receiver configured to track one or more traffic levels of one or more locations within at least one of the first coverage area or the second coverage area, or quality of service level information of one or more UEs in at least one of the first coverage area or the second coverage area.

9. The system of claim 8, wherein the beamforming module is configured to analyze the at least one or more traffic levels or quality of service level information, and, based on the analysis, dynamically adjust at least one of a location of the first or second coverage area, or a size of the first or second coverage area.

10. The system of claim 8, wherein the tracking receiver is configured to determine a direction of arrival of one or more signals received from at least one of the one or more UEs, and wherein the beamforming module is configured to analyze the direction of arrival, and, based on analysis in the RF domain, dynamically adjust at least one of a location of the second coverage area or a size of the second coverage area.

11. The system of claim 9, wherein the adjustment comprises an adjustment of at least one of a tilt angle, azimuth angle, or pattern of an antenna beam generated by the second array of radiating elements.

12. The system of any of claims 8-11, wherein the adjustment comprises steering a null of the pattern of the antenna beam generated by the second array of radiating elements to an undesired area.

13. The system of any of claims 9-11, wherein the second coverage area is within the first coverage area.

14. The system of any of claims 9-11, wherein the second coverage area provides non-overlapping or partially overlapping coverage with the first coverage area.

15. A method for operating an antenna including first and second arrays of radiating elements, the first array of radiating elements being configured to provide wireless coverage on a first frequency carrier in a first coverage area, and the second array of radiating elements being configured to provide wireless coverage on a second frequency carrier in a second coverage area, where the first frequency carrier does not overlap the second frequency carrier, the method comprising:
receiving one or more indicators associated with one or more user equipments, UEs;
analyzing the one or more indicators in a radio frequency, RF, domain or an intermediate frequency, IF, domain; and based on said analysis of the one of more indicators, dynamically adjusting, in the RF domain, at least one of a location of the second coverage area or a size of the second coverage area.

## Patentansprüche

1. System, welches umfasst:
eine erste Anordnung von Strahlungselementen;
eine zweite Anordnung von Strahlungselementen;
ein Strahlformungsmodul, das mit der ersten Anordnung von Strahlungselementen und mit der zweiten Anordnung von Strahlungselementen gekoppelt ist, wobei die erste Anordnung von Strahlungselementen konfiguriert ist, eine drahtlose Abdeckung auf einem ersten Frequenzträger in einem ersten Abdeckungsbereich bereitzustellen, und die zweite Anordnung von Strahlungselementen konfiguriert ist, eine drahtlose Abdeckung auf einem zweiten Frequenzträger in einem zweiten Abdeckungsbereich bereitzustellen, wobei der erste Frequenzträger den zweiten Frequenzträger nicht überlappt, wobei das Strahlformungsmodul konfiguriert ist:
einen oder mehrere Indikatoren zu empfangen, die einem oder mehreren Benutzergeräten, UEs, in mindestens einem von dem ersten Abdeckungsbereich oder dem zweiten Abdeckungsbereich zugeordnet sind;
den einen oder die mehreren Indikatoren in einem Funkfrequenz, RF, Bereich oder einem Zwischenfrequenz, IF, Bereich zu analysieren; und
basierend auf der Analyse des einen oder der mehreren Indikatoren, im RF-Bereich mindestens eines von einem Ort des ersten oder zweiten Abdeckungsbereichs oder eine Größe des ersten oder zweiten Abdeckungsbereichs dynamisch anzupassen.

2. System nach Anspruch 1, bei welchem die dynamische Anpassung im RF-Bereich von mindestens einem von dem Ort des ersten oder zweiten Abdeckungsbereichs oder der Größe des ersten oder zweiten Abdeckungsbereichs eine Anpassung von mindestens einem umfasst von einem Neigungswinkel, Azimutwinkel oder Antennendiagramm der ersten Anordnung von Strahlungselementen oder der zweiten Gruppe von Strahlungselementen.

3. System nach Anspruch 2, bei welchem die dynamische Anpassung im RF-Bereich von mindestens einem von dem Ort des ersten oder zweiten Abdeckungsbereichs oder der Größe des ersten oder zweiten Abdeckungsbereichs ein Lenken einer Nullstelle des Antennendiagramms auf einen unerwünschten Bereich umfasst.

4. System nach einem der Ansprüche 1-3, wobei der zweite Abdeckungsbereich innerhalb des ersten Abdeckungsbereichs liegt.

5. System nach einem der Ansprüche 1-3, wobei die erste Anordnung in einer ersten Antenne untergebracht ist und die zweite Anordnung in einer zweiten Antenne untergebracht ist.

6. System nach einem der Ansprüche 1-3, wobei der eine oder die mehreren Indikatoren mindestens eines umfassen von einer Information zur Anrufqualität, Information zur Anrufsignalstärke oder Information zum Verkehrsort, die mit mindestens einem von dem einen oder den mehreren UEs im Zusammenhang steht.

7. System nach einem der Ansprüche 1-3, wobei der eine oder die mehreren Indikatoren eine zeitliche Vorabinformation enthalten.

8. System nach Anspruch 1, ferner umfassend
einen Nachspür-Empfänger, der konfiguriert ist, eine oder mehrere Verkehrsebenen von einem oder mehreren Orten innerhalb von mindestens einem von dem ersten Abdeckungsbereich oder zweiten Abdeckungsbereich oder einer Information zur Dienstqualität von einem oder mehreren UEs in mindestens einem von dem ersten Abdeckungsbereich oder zweiten Abdeckungsbereich zu verfolgen.

9. System nach Anspruch 8, wobei das Strahlformungsmodul konfiguriert ist, die mindestens eine von der einen oder den mehreren Verkehrsebenen oder der Information zur Dienstqualität zu analysieren und, basierend auf der Analyse, mindestens eines von einem Ort des ersten oder zweiten Abdeckungsbereichs oder einer Größe des ersten oder zweiten Abdeckungsbereichs dynamisch anzupassen.

10. System nach Anspruch 8, wobei der Nachspür-Empfänger konfiguriert ist, eine Ankunftsrichtung eines oder mehrerer Signale zu bestimmen, die von mindestens einem von dem einen oder den mehreren UEs empfangen werden, und wobei das Strahlformungsmodul konfiguriert ist, die Ankunftsrichtung zu analysieren und basierend auf der Analyse im RF-Bereich, mindestens eines von einem Ort des zweiten Abdeckungsbereichs oder einer Größe des zweiten Abdeckungsbereichs dynamisch anzupassen.

11. System nach Anspruch 9, bei welchem die Anpassung eine Anpassung von mindestens einem umfasst von einem Neigungswinkel, Azimutwinkel oder Diagramm eines Antennenstrahls, erzeugt durch die zweite Anordnung von Strahlungselementen.

12. System nach einem der Ansprüche 8-11, wobei die Anpassung ein Lenken einer Nullstelle des Diagramms des Antennenstrahls, erzeugt durch die zweite Anordnung von Strahlungselementen, auf einen unerwünschten Bereich umfasst.

13. System nach einem der Ansprüche 9-11, wobei der zweite Abdeckungsbereich innerhalb des ersten Abdeckungsbereichs liegt.

14. System nach einem der Ansprüche 9-11, wobei der zweite Abdeckungsbereich eine nicht-überlappende oder teilweise überlappende Abdeckung mit dem ersten Abdeckungsbereich bereitstellt.

15. Verfahren zum Betreiben einer Antenne, welche eine erste und zweite Anordnung von Strahlungselementen umfasst, wobei die erste Anordnung von Strahlungselementen konfiguriert ist, eine drahtlose Abdeckung auf einem ersten Frequenzträger in einem ersten Abdeckungsbereich bereitzustellen, und die zweite Anordnung von Strahlungselementen konfiguriert ist, eine drahtlose Abdeckung auf einem zweiten Frequenzträger in einem zweiten Abdeckungsbereich bereitzustellen, wobei der erste Frequenzträger den zweiten Frequenzträger nicht überlappt, wobei das Verfahren umfasst:
Empfangen von einem oder mehreren Indikatoren, die einem oder mehreren Benutzergeräten, UEs, zugeordnet sind;
Analysieren des einen oder der mehreren Indikatoren in einem Funkfrequenz, RF, Bereich oder einem Zwischenfrequenz, IF, Bereich; und
dynamisches Anpassen, basierend auf der Analyse des einen oder der mehreren Indikatoren, im RF-Bereich, mindestens eines von einem Ort des zweiten Abdeckungsbereichs oder einer Größe des zweiten Abdeckungsbereichs.

## Revendications

1. Système comprenant :
un premier réseau d'éléments rayonnants ;
un deuxième réseau d'éléments rayonnants ;
un module de formation de faisceau couplé au premier réseau d'éléments rayonnants et au deuxième réseau d'éléments rayonnants, le premier réseau d'éléments rayonnants étant configuré pour fournir une couverture sans fil sur une première onde porteuse dans une première zone de couverture, et le deuxième réseau d'éléments rayonnants étant configuré pour fournir une couverture sans fil sur une deuxième onde porteuse dans une deuxième zone de couverture, dans lequel la première onde porteuse ne chevauche pas la deuxième onde porteuse, le module de formation de faisceau étant configuré pour :
recevoir un ou plusieurs indicateurs associés à un ou plusieurs équipements utilisateurs, UE, dans au moins l'une de la première zone de couverture et de la deuxième zone de couverture ;
analyser lesdits un ou plusieurs indicateurs dans un domaine de radiofréquences, RF, ou un domaine de fréquences intermédiaires, IF ; et,
sur la base de ladite analyse desdits un ou plusieurs indicateurs, ajuster dynamiquement dans le domaine RF au moins un élément parmi une localisation de la première ou de la deuxième zone de couverture et une taille de la première ou de la deuxième zone de couverture.

2. Système selon la revendication 1, dans lequel l'ajustement dynamique dans le domaine RF d'au moins un élément parmi la localisation de la première ou de la deuxième zone de couverture et la taille de la première ou de la deuxième zone de couverture consiste à ajuster au moins un élément parmi un angle d'inclinaison, un angle d'azimut ou un diagramme d'antenne du premier réseau d'éléments rayonnants ou du deuxième réseau d'éléments rayonnants.

3. Système selon la revendication 2, dans lequel l'ajustement dynamique dans le domaine RF d'au moins un élément parmi la localisation de la première ou de la deuxième zone de couverture et la taille de la première ou de la deuxième zone de couverture, consiste en outre à orienter un zéro du diagramme d'antenne vers une zone non désirée.

4. Système selon l'une quelconque des revendications 1 à 3, dans lequel la deuxième zone de couverture se trouve à l'intérieur de la première zone de couverture.

5. Système selon l'une quelconque des revendications 1 à 3, dans lequel le premier réseau est logé dans une première antenne et le deuxième réseau est logé dans une deuxième antenne.

6. Système selon l'une quelconque des revendications 1 à 3, dans lequel lesdits un ou plusieurs indicateurs incluent au moins l'une des informations suivantes : informations sur la qualité d'appel, informations sur l'intensité du signal d'appel ou informations sur la localisation du trafic associées à au moins l'un desdits un ou plusieurs UE.

7. Système selon l'une quelconque des revendications 1 à 3, dans lequel lesdits un ou plusieurs indicateurs incluent des informations sur l'avance de temps.

8. Système selon la revendication 1, comprenant en outre un récepteur de suivi configuré pour suivre un ou plusieurs niveaux de trafic d'une ou de plusieurs localisations dans au moins l'une de la première zone de couverture ou de la deuxième zone de couverture, ou des informations sur le niveau de qualité de service d'un ou de plusieurs UE dans au moins l'une de la première zone de couverture ou de la deuxième zone de couverture.

9. Système selon la revendication 8, dans lequel le module de formation de faisceau est configuré pour analyser lesdits un ou plusieurs niveaux de trafic ou les informations sur le niveau de qualité de service et, sur la base de l'analyse, ajuster dynamiquement au moins un élément parmi une localisation de la première ou de la deuxième zone de couverture et une taille de la première ou de la deuxième zone de couverture.

10. Système selon la revendication 8, dans lequel le récepteur de suivi est configuré pour déterminer une direction d'arrivée d'un ou de plusieurs signaux reçus d'au moins un desdits un ou plusieurs UE, et dans lequel le module de formation de faisceau est configuré pour analyser la direction d'arrivée et, sur la base de l'analyse dans le domaine RF, ajuster dynamiquement au moins un élément parmi une localisation de la deuxième zone de couverture et une taille de la deuxième zone de couverture.

11. Système selon la revendication 9, dans lequel l'ajustement consiste à ajuster au moins un élément parmi un angle d'inclinaison, un angle d'azimut et un diagramme d'un faisceau d'antenne généré par le deuxième réseau d'éléments rayonnants.

12. Système selon l'une quelconque des revendications 8 à 11, dans lequel l'ajustement consiste en outre à orienter un zéro du diagramme du faisceau d'antenne généré par le deuxième réseau d'éléments rayonnants vers une zone non souhaitée.

13. Système selon l'une quelconque des revendications 9 à 11, dans lequel la deuxième zone de couverture se trouve à l'intérieur de la première zone de couverture.

14. Système selon l'une quelconque des revendications 9 à 11, dans lequel la deuxième zone de couverture fournit une couverture sans chevauchement ou en chevauchement partiel avec la première zone de couverture.

15. Procédé pour faire fonctionner une antenne incluant des premier et deuxième réseaux d'éléments rayonnants, le premier réseau d'éléments rayonnants étant configuré pour fournir une couverture sans fil sur une première onde porteuse dans une première zone de couverture, et le deuxième réseau d'éléments rayonnants étant configuré pour fournir une couverture sans fil sur une deuxième onde porteuse dans une deuxième zone de couverture, dans lequel la première onde porteuse ne chevauche pas la deuxième onde porteuse, le procédé comprenant les étapes consistant à :
recevoir un ou plusieurs indicateurs associés à un ou plusieurs équipements utilisateurs, UE ;
analyser lesdits un ou plusieurs indicateurs dans un domaine de radiofréquences, RF, ou un domaine de fréquences intermédiaires, IF ; et,
sur la base de ladite analyse desdits un ou plusieurs indicateurs, ajuster dynamiquement, dans le domaine RF, au moins un élément parmi une localisation de la deuxième zone de couverture et une taille de la deuxième zone de couverture.
